(19) Europäisches Patentamt
European Patent Office
Office européen des brevets

(11) **EP 3 920 278 B1**

(12) **EUROPEAN PATENT SPECIFICATION**

(45) Date of publication and mention
of the grant of the patent:
**08.10.2025  Bulletin 2025/41**

(21) Application number: **20748633.3**

(22) Date of filing: **16.01.2020**

(51) International Patent Classification (IPC):
*H01M 4/36* (2006.01)          *H01M 4/525* (2010.01)
*H01M 4/131* (2010.01)          *H01M 4/62* (2006.01)

(52) Cooperative Patent Classification (CPC):
**H01M 4/366; C01G 53/42; H01M 4/131;**
**H01M 4/525; H01M 4/62;** C01P 2002/52;
C01P 2002/60; C01P 2002/74; C01P 2002/77;
C01P 2004/45; C01P 2006/40; Y02E 60/10

(86) International application number:
**PCT/JP2020/001304**

(87) International publication number:
**WO 2020/158420 (06.08.2020 Gazette 2020/32)**

(54) **POSITIVE ELECTRODE ACTIVE MATERIAL FOR NON-AQUEOUS ELECTROLYTE SECONDARY CELL, AND NON-AQUEOUS ELECTROLYTE SECONDARY CELL**

POSITIVES AKTIVES ELEKTRODENMATERIAL FÜR SEKUNDÄRBATTERIE MIT WASSERFREIEM ELEKTROLYT UND SEKUNDÄRZELLE MIT WASSERFREIEM ELEKTROLYT

MATÉRIAU ACTIF D'ÉLECTRODE POSITIVE POUR ACCUMULATEUR À ÉLECTROLYTE NON AQUEUX, ET ACCUMULATEUR À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.01.2019  JP 2019014808**

(43) Date of publication of application:
**08.12.2021  Bulletin 2021/49**

(73) Proprietor: **Panasonic Intellectual Property Management Co., Ltd.**
**Osaka-shi, Osaka 540-6207 (JP)**

(72) Inventors:
• **TOCHIO, Takaya**
 **Osaka-shi, Osaka 540-6207 (JP)**
• **AOKI, Yoshinori**
 **Osaka-shi, Osaka 540-6207 (JP)**
• **KAWAKITA, Akihiro**
 **Osaka-shi, Osaka 540-6207 (JP)**
• **GOSHIMA, Yuji**
 **Osaka-shi, Osaka 540-6207 (JP)**
• **OGASAWARA, Takeshi**
 **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(56) References cited:
WO-A1-2010/147179          WO-A1-2019/131234
WO-A1-2020/044614          CN-A- 103 078 109
JP-A- 2016 110 889          JP-A- 2017 084 674
JP-A- 2019 167 257          US-A1- 2014 205 746

**Description**

TECHNICAL FIELD

The present invention relates to techniques for a positive electrode active material for a non-aqueous electrolyte secondary battery, and a non-aqueous electrolyte secondary battery.

BACKGROUND ART

Recently, a non-aqueous electrolyte secondary battery comprising a positive electrode, a negative electrode and a non-aqueous electrolyte, in which charge/discharge is performed by movement of lithium ions and the like between the positive electrode and the negative electrode, has been used widely as a high-output and high-energy density secondary battery.

The followings are, for example, known as positive electrode active materials for use in positive electrodes of non-aqueous electrolyte secondary batteries.

For example, Patent Literature 1 discloses a positive electrode active material for a non-aqueous electrolytic solution secondary battery, in which the positive electrode active material is represented by formula 1: $Li_xNi_{1-y-z-v-w}Co_yAlzM^1_vM^2_wO_2$, element $M^1$ in the formula 1 is at least one selected from the group consisting of Mn, Ti, Y, Nb, Mo and W, element $M^2$ in the formula 1 corresponds to at least two selected from the group consisting of Mg, Ca, Sr and Ba and the element $M^2$ includes at least Mg and Ca, and the formula 1 satisfies $0.97 \leq x \leq 1.1$, $0.05 \leq y \leq 0.35$, $0.005 \leq z \leq 0.1$, $0.0001 \leq v \leq 0.05$, and $0.0001 \leq w \leq 0.05$.

For example, Patent Literature 2 discloses a positive electrode active material for a non-aqueous electrolytic solution secondary battery, in which the composition is represented by the following formula (I), and at least one element selected from the group consisting of Mo, W, Nb, Ta and Re is contained at a proportion of 0.1 mol% or more and 5 mol% or less relative to the total molar amount of Mn, Ni and Co in the formula (I).

$$[L]_{3a}[M]_{3b}[O_2]_{6c} \qquad ... (I)$$

In the formula (I), L represents an element including at least Li, M represents an element including at least Ni, Mn and Co, or Li, Ni, Mn and Co,

$$0.4 \leq \text{Molar ratio of Ni/(Mn+Ni+Co)} < 0.7$$

$$0.1 < \text{Molar ratio of Mn/(Mn+Ni+Co)} \leq 0.4$$

$$0.1 \leq \text{Molar ratio of Co/(Mn+Ni+Co)} \leq 0.3$$

are satisfied, and the molar ratio of Li in M is 0 or more and 0.05 or less.

Then, Patent Literature 3 discloses a positive electrode active material for lithium ion battery, positive electrode for lithium ion battery, and lithium ion battery. Patent Literature 4 discloses a gradient coated $LiNiO_2$ material and preparation method. Patent Literature 5 discloses a process for preparing a multi-layer electrochromic structure.

CITATION LIST

PATENT LITERATURES

PATENT LITERATURE 1: Japanese Unexamined Patent Application Publication No. 2006-310181
PATENT LITERATURE 2: Japanese Unexamined Patent Application Publication No. 2009-289726
PATENT LITERATURE 3: Japanese Unexamined Patent Application Publication No. 2017-084674
PATENT LITERATURE 4: Chinese Patent Application Publication No. 103 078 109
PATENT LITERATURE 5: US Patent Application Publication No. 2014/205746

**EP 3 920 278 B1**

SUMMARY

Meanwhile, a lithium transition metal oxide in which the proportion of Ni is 90 mol% or more and less than 100 mol% relative to the total amount of metal elements except for Li is expected as a positive electrode active material imparting high battery performance exhibited, but has the problem of causing an increase in battery resistance at a low temperature. For example, 5 mol% or more of Co is preferably added as in Patent Literature 1, for suppression of an increase in battery resistance at a low temperature, but cobalt is expensive and there is a demand for suppression of the content of Co in terms of production cost.

It is an advantage of the present disclosure to provide a positive electrode active material and a non-aqueous electrolyte secondary battery, in which an increase in battery resistance at a low temperature can be suppressed even in suppression of the content of Co in a lithium transition metal oxide in which the proportion of Ni relative to the total amount of metal elements except for Li is in the range of 90 mol% or more and less than 100 mol%.

A positive electrode active material for a non-aqueous electrolyte secondary battery according to one aspect of the present disclosure has a lithium transition metal oxide having a layered structure and including Ni, Nb, a tetravalent or higher metal element other than Nb, which is Mn, and optionally Co, and external additive particles including at least one element selected from the group consisting of W, B and Al and adhered onto surfaces of particles of the lithium transition metal oxide, wherein a proportion of Ni is in the range of 90 mol% $\leq$ Ni < 100 mol% relative to the total amount of metal elements except for Li in the lithium transition metal oxide, a proportion of Nb is in the range of 0 mol% < Nb $\leq$ 3 mol% relative to the total amount of metal elements except for Li in the lithium transition metal oxide, a proportion of Co is in the range of Co $\leq$ 2.0 mol% relative to the total amount of metal elements except for Li in the lithium transition metal oxide, a proportion of metal element(s) other than Li present in a Li layer of the layered structure is in the range of 1 mol % or more and 2.5 mol % or less relative to the total amount of metal elements except for Li in the lithium transition metal oxide, a half width n of a diffraction peak of the (208) plane of the lithium transition metal oxide, in an X-ray diffraction pattern with X-ray diffraction, is $0.30° \leq n \leq 0.50°$, and a proportion of W, B and Al in the external additive particles is 0.01 mol% or more and 0.3 mol% or less relative to the total amount of the lithium transition metal oxide.

A non-aqueous electrolyte secondary battery according to one aspect of the present disclosure comprises a positive electrode including the positive electrode active material for a non-aqueous electrolyte secondary battery.

According to one aspect of the present disclosure, an increase in battery resistance at a low temperature can be suppressed even in suppression of the content of Co in a lithium transition metal oxide in which the proportion of Ni relative to the total amount of metal elements except for Li is in the range of 90 mol% or more and less than 100 mol%.

DESCRIPTION OF EMBODIMENTS

A positive electrode active material for a non-aqueous electrolyte secondary battery according to one aspect of the present disclosure includes a lithium transition metal oxide having a layered structure and including Ni, Nb, a tetravalent or higher metal element other than Nb, and optionally Co, and external additive particles including at least one element selected from the group consisting of W, B and Al and adhered onto surfaces of particles of the lithium transition metal oxide, wherein the proportion of Ni is in the range of 90 mol% $\leq$ Ni < 100 mol% relative to the total amount of metal elements except for Li in the lithium transition metal oxide, the proportion of Nb is in the range of 0 mol% < Nb $\leq$ 3 mol% relative to the total amount of metal elements except for Li in the lithium transition metal oxide, the proportion of Co is in the range of Co $\leq$ 2.0 mol% relative to the total amount of metal elements except for Li in the lithium transition metal oxide, the proportion of metal element(s) other than Li present in a Li layer of the layered structure is in the range of 1 mol% or more and 2.5 mol% or less relative to the total amount of metal elements except for Li in the lithium transition metal oxide, the half width n of the diffraction peak of the (208) plane of the lithium transition metal oxide, in an X-ray diffraction pattern with X-ray diffraction, is $0.30° \leq n \leq 0.50°$, and the proportion of W, B and Al in the external additive particles is 0.01 mol% or more and 0.3 mol% or less relative to the total amount of the lithium transition metal oxide.

In general, in a case where the content of Co in a lithium transition metal oxide in which the proportion of Ni relative to the total amount of metal elements except for Li is in the range of 90 mol% or more and less than 100 mol% is 2 mol% or less, a problem is that a non-aqueous electrolyte secondary battery is increased in battery resistance at a low temperature. However, it is considered that, in a case where external additive particles including at least one element selected from the group consisting of W, B and Al are adhered onto surfaces of particles of a Nb-containing lithium transition metal oxide, according to one aspect of the present disclosure, an electronic interaction is exerted between at least one element selected from the group consisting of W, B and Al, and Nb to result in an improvement in state of surfaces of particles of the lithium transition metal oxide. As a result, an increase in battery resistance at a low temperature is suppressed. If the content of Nb in the lithium transition metal oxide is too high, divalent Ni may be present in a large amount in a layered structure of the lithium transition metal oxide, thereby causing the layered structure to be unstable, to result in deterioration in battery capacity. If the proportion of W, B and Al in the external additive particles relative to the total amount of the lithium transition metal oxide is too high, Li in the lithium transition metal oxide may be extracted to result in deterioration in battery

3

capacity. Thus, the content of Nb in the lithium transition metal oxide and the proportion of W, B and Al in the external additive particles relative to the amount of the lithium transition metal oxide can be in respective ranges defined in one aspect of the present disclosure, to result in not only suppression of an increase in battery resistance at a low temperature, but also suppression of deterioration in battery capacity.

Furthermore, it is considered that the tetravalent or higher metal element other than Nb is included in the lithium transition metal oxide and a predetermined amount of metal elements other than Li is present in the Li layer of the layered structure, according to one aspect of the present disclosure, to thereby allow the layered structure to be further stabilized, and, for example, deterioration in battery capacity can be suppressed. Additionally, it is considered that the half width of the diffraction peak of the (208) plane, in an X-ray diffraction pattern with X-ray diffraction, is in the predetermined range, according to one aspect of the present disclosure, to thereby result in proper fluctuation in arrangement between the Li layer and the transition metal layer of the layered structure, leading to stabilization of the layered structure, and, for example, deterioration in battery capacity can be suppressed.

Hereinafter, one example of a non-aqueous electrolyte secondary battery using a positive electrode active material for a non-aqueous electrolyte secondary battery according to one aspect of the present disclosure will be described.

A non-aqueous electrolyte secondary battery according to one example of an embodiment comprises a positive electrode, a negative electrode and a non-aqueous electrolyte. A separator is suitably provided between the positive electrode and the negative electrode. Specifically, the secondary battery has a structure where a wound electrode assembly formed by winding the positive electrode and the negative electrode with the separator being interposed therebetween, and the non-aqueous electrolyte are housed in an outer package. The electrode assembly is not limited to such a wound electrode assembly, and other form of an electrode assembly, such as a stacked electrode assembly formed by stacking the positive electrode and the negative electrode with the separator being interposed therebetween, may also be applied. The form of the non-aqueous electrolyte secondary battery is not particularly limited, and examples can include cylindrical, square, coin, button, and laminate forms.

Hereinafter, the positive electrode, the negative electrode, the non-aqueous electrolyte and the separator for use in the non-aqueous electrolyte secondary battery according to one example of an embodiment will be described in detail.

<Positive Electrode>

The positive electrode is configured from, for example, a positive electrode current collector such as metal foil and a positive electrode active material layer formed on the positive electrode current collector. The positive electrode current collector which can be here used is, for example, any foil of a metal which is stable in the potential range of the positive electrode, such as aluminum, or any film obtained by placing such a metal on a surface layer. The positive electrode active material layer includes, for example, a positive electrode active material, a binder, a conductive agent, and the like.

The positive electrode is obtained by, for example, applying a positive electrode mixture slurry including a positive electrode active material, a binder, a conductive agent, and the like onto the positive electrode current collector and drying the resultant, thereby forming a positive electrode active material layer on the positive electrode current collector, and rolling the positive electrode active material layer.

The positive electrode active material includes a lithium transition metal oxide having a layered structure and including Ni, Nb, a tetravalent or higher metal element other than Nb, and optionally Co, and external additive particles including at least one element selected from the group consisting of W, B and Al and adhered onto surfaces of particles of the lithium transition metal oxide. Hereinafter, the lithium transition metal oxide having a layered structure and including Ni, Nb, a tetravalent or higher metal element other than Nb, and optionally Co is referred to as "the lithium transition metal oxide in the present embodiment".

Examples of the layered structure of the lithium transition metal oxide in the present embodiment include a layered structure belonging to the space group R-3m and a layered structure belonging to the space group C2/m. In particular, a layered structure belonging to the space group R-3m is preferable from the viewpoints of, for example, an increase in capacity and stability of the layered structure.

The proportion of Ni in the lithium transition metal oxide in the present embodiment, relative to the total amount of metal elements except for Li, may be in the range of 90 mol% $\leq$ Ni < 100 mol%, and is preferably in the range of 92 mol% $\leq$ Ni $\leq$ 96 mol% from the viewpoint of, for example, an increase in capacity of a battery.

The proportion of Nb relative to the total amount of metal elements except for Li in the lithium transition metal oxide in the present embodiment may be in the range of 0 mol% < Nb $\leq$ 3 mol% from the viewpoint of, for example, suppression of an increase in battery resistance at a low temperature, and is preferably in the range of 0.2 mol% $\leq$ Nb $\leq$ 2.0 mol%, more preferably in the range of 0.2 mol% $\leq$ Nb $\leq$ 1.5 mol%. Although an increase in battery resistance at a low temperature can be suppressed even if the content of Nb is more than 3 mol%, unstable divalent Ni may be present in a large amount in the layered structure, thereby causing the layered structure to be unstable, to result in deterioration in battery capacity.

The proportion of Co may be in the range of Co ≤ 2 mol% relative to the total amount of metal elements except for Li in the lithium transition metal oxide in the present embodiment, and is preferably in the range of Co ≤ 1.0 mol%, more preferably Co = 0.0 mol%, in terms of production cost.

Examples of the tetravalent or higher metal element other than Nb in the lithium transition metal oxide in the present embodiment include Ti, Mn, Sn, Zr, Si, Mo, W, Ta, V, and Cr. In a case where the tetravalent or higher metal element other than Nb is included in the lithium transition metal oxide, the layered structure is more stabilized, leading to suppression of, for example, deterioration in battery capacity. Mn and Ti are preferable, and Mn is particularly preferable, among the above metal elements exemplified, from the viewpoint of, for example, suppression of deterioration in battery capacity. The claimed invention includes Mn as a tetravalent or higher metal element other than Nb. The content of the tetravalent or higher metal element other than Nb is preferably, for example, 1 mol% to 5 mol%, relative to the total amount of metal elements except for Li in the lithium transition metal oxide in the present embodiment.

The lithium transition metal oxide in the present embodiment may include any metal element other than the above metal elements, in addition to Li, Ni, Nb, the tetravalent or higher metal element other than Nb, and Co, and examples of such any other metal element include Al, Fe, Mg, Cu, Na, K, Ba, Sr, Bi, Be, Zn, Ca and B. In particular, Al and Fe are preferable, and Al is particularly preferable, from the viewpoint of, for example, suppression of deterioration in battery capacity.

The content of each element constituting the lithium transition metal oxide in the present embodiment can be measured by an inductively coupled plasma atomic emission spectrometer (ICP-AES), an electron probe microanalyzer (EPMA), an energy dispersive X-ray analyzer (EDX), and the like.

The metal element(s) other than Li is/are present in the Li layer of the layered structure of the lithium transition metal oxide in the present embodiment. The proportion of the metal element(s) other than Li present in the Li layer of the layered structure relative to the total amount of metal elements except for Li in the lithium transition metal oxide is in the range of 1 mol% or more and 2.5 mol% or less, preferably in the range of 1 mol% or more and 2 mol% or less, from the viewpoint of, for example, suppression of deterioration in battery capacity. The main element of the metal element(s) other than Li present in the Li layer of the layered structure is Ni with reference to the proportion of each element constituting the lithium transition metal oxide in the present embodiment, and can also be other metal element.

The proportion of the metal element(s) other than Li present in the Li layer of the layered structure is determined from the Rietveld analysis result of an X-ray diffraction pattern with X-ray diffraction measurement of the lithium transition metal oxide in the present embodiment.

The X-ray diffraction pattern is obtained by using a powder X-ray diffractometer (trade name "RINT-TTR", manufactured by Rigaku Corporation, radiation source Cu-Kα) according to powder X-ray diffractometry in the following conditions.

Measurement range; 15 to 120°     Scanning speed; 4°/min
Analysis range; 30 to 120°

Background; B-spline
Profile function; split pseudo-Voigt function
Binding conditions; Li(3a) + Ni(3a) = 1

$$Ni(3a) + Ni(3b) = y$$

y represents the proportion of Ni (0.90 ≤ y < 1.00) relative to the total amount of metal elements except for Li in the lithium transition metal oxide.
ICSD No.; 98-009-4814

PDXL2 (Rigaku Corporation) which is Rietveld analysis software is used in Rietveld analysis of the X-ray diffraction pattern.

The half width n of the diffraction peak of the (208) plane of the lithium transition metal oxide in the present embodiment, in the X-ray diffraction pattern with X-ray diffraction, is in the range of 0.30° ≤ n ≤ 0.50°, preferably in the range of 0.30° ≤ n ≤ 0.45°, from the viewpoint of, for example, suppression of deterioration in battery capacity. In a case where the half width n of the diffraction peak of the (208) plane is out of the range, too small or too large fluctuation in arrangement between the Li layer and the transition metal layer of the layered structure may result in deterioration in stability of the layered structure, causing deterioration in battery capacity.

The crystal structure of the lithium transition metal oxide in the present embodiment, determined from the result of the X-ray diffraction pattern with X-ray diffraction, preferably has a lattice constant a representing an a-axis length, in the range of 2.870 Å $\leq$ a $\leq$ 2.877 Å, and a lattice constant c representing a c-axis length, in the range of 14.18 Å $\leq$ c $\leq$ 14.21 Å. A case where the lattice constant a is less than 2.870 Å may result in an unstable structure where the atomic distance in the crystal structure is small, and cause battery capacity to be deteriorated, as compared with a case where the above range is satisfied. A case where the lattice constant a is more than 2.877 Å may result in an unstable structure where the atomic distance in the crystal structure is large, and cause battery capacity to be deteriorated, as compared with a case where the above range is satisfied. A case where the lattice constant c is less than 14.18 Å may result in an unstable structure where the atomic distance in the crystal structure is small, and cause battery capacity to be deteriorated, as compared with a case where the above range is satisfied. A case where the lattice constant c is more than 14.21 Å may result in an unstable structure where the atomic distance in the crystal structure is large, and cause battery capacity to be deteriorated, as compared with a case where the above range is satisfied.

The lithium transition metal oxide in the present embodiment has a crystallite size s in the range of 400 Å $\leq$ s $\leq$ 700 Å, preferably 400 Å $\leq$ s $\leq$ 550 Å, as calculated from the half width of a diffraction peak of the (104) plane, in the X-ray diffraction pattern with X-ray diffraction, according to the Scherrer's equation (Scherrer equation). A case where the crystallite size s of the lithium transition metal oxide in the present embodiment is out of the above range may cause stability of the layered structure to be deteriorated, and cause battery capacity to be deteriorated, as compared with a case where the above range is satisfied. The Scherrer's equation is represented by the following equation.

$$s = K\lambda/B\cos\theta$$

In equation, s represents the crystallite size, $\lambda$ represents the wavelength of X-ray, B represents the half width of a diffraction peak of the (104) plane, $\theta$ represents the diffraction angle (rad), and K represents the Scherrer constant. In the present embodiment, K is 0.9.

The content of the lithium transition metal oxide in the present embodiment is preferably 90% by mass or more, preferably 99% by mass or more relative to the total mass of the positive electrode active material from the viewpoint of, for example, an improvement in charge/discharge efficiency.

The positive electrode active material of the present embodiment may include any lithium transition metal oxide other than the lithium transition metal oxide in the present embodiment. Examples of such any other lithium transition metal oxide include a lithium transition metal oxide in which the content of Ni is 0 mol% to less than 90 mol%.

The positive electrode active material of the present embodiment includes at least any one selected from the group consisting of W, B and Al, and has external additive particles adhered onto surfaces of particles of the lithium transition metal oxide in the present embodiment, as described above. The surfaces of particles refer to at least any one selected from the group consisting of surfaces of secondary particles obtained by aggregation of primary particles and surfaces of primary particles in such secondary particles. In other words, the external additive particles are adhered onto surfaces of secondary particles of the lithium transition metal oxide, surfaces of primary particles in such secondary particles, or both the surfaces. The surfaces of secondary particles have the same meaning as in surfaces of primary particles present in the surfaces of secondary particles.

The external additive particles including at least any one selected from the group consisting of W, B and Al are at least any one selected from the group consisting of, for example, external additive particles including W, B and Al, external additive particles including W and B, external additive particles including W and Al, external additive particles including B and Al, external additive particles including W, external additive particles including B, and external additive particles including Al.

The external additive particles including at least any one selected from the group consisting of W, B and Al are, for example, particles of any oxide including at least any one selected from the group consisting of W, B and Al, or any salt thereof. Examples of the external additive particles including W include respective particles of tungsten oxides such as $WO_2$, $WO_3$ and $W_2O_5$, and respective particles of salts of tungsten oxides such as lithium tungstate. Examples of the external additive particles including B include respective particles of boron oxides such as $B_2O_3$, and respective particles of salts of boron oxides such as lithium borate. Examples of particles including Al include respective particles of aluminum oxides such as $Al_2O_3$. The external additive particles are not limited to particles of any oxide or any salt thereof, and may be particles of, for example, nitride, hydroxide, a carbonic acid compound, a sulfuric acid compound, a phosphoric acid compound, or a nitric acid compound.

The content of the external additive particles including at least any one selected from the group consisting of W, B and Al may be 0.01 mol% or more and 0.3 mol% or less and is preferably 0.05 mol% or more and 0.3 mol% or less, further preferably 0.05 mol% or more and 0.25 mol% or less, in terms of the proportion of W, B and Al in the external additive particles relative to the total amount of the lithium transition metal oxide in the present embodiment. In a case where the proportion of W, B and Al is less than 0.01 mol%, no effect of suppression of an increase in battery resistance at a low temperature is obtained. Also in a case where the proportion of W, B and Al is more than 0.3 mol%, lithium in the lithium transition metal oxide may be extracted to cause battery capacity to be deteriorated, although an increase in battery resistance at a low temperature can be suppressed.

One example of the method for producing the lithium transition metal oxide in the present embodiment will be described.

The method for producing the lithium transition metal oxide in the present embodiment preferably comprises a multistage firing step including, for example, a first firing step of firing a mixture including a compound including Ni, a tetravalent or higher metal element other than Nb, and optionally other metal element(s) (for example, Co and/or Al), a Li compound, and a Nb-containing compound, to a first set temperature of 450°C or more and 680°C or less at a first rate of temperature rise under an oxygen gas flow in a firing furnace, and a second firing step of firing a fired product obtained in the first firing step, to a second set temperature of more than 680°C and 800°C or less at a second rate of temperature rise under an oxygen gas flow in a firing furnace. Preferably, the first rate of temperature rise is in the range of 1.5°C/min or more and 5.5°C/min or less and the second rate of temperature rise is lower than the first rate of temperature rise and is in the range of 0.1°C/min or more and 3.5°C/min or less. Such multistage firing facilitates adjustment of each of parameters, for example, the proportion of metal element(s) other than Li present in the Li layer of the layered structure, the half width n of the diffraction peak of the (208) plane, the lattice constant a, the lattice constant c and the crystallite size s, within the defined range, in the lithium transition metal oxide in the present embodiment, finally obtained, as compared with single-stage firing. Hereinafter, the first firing step and the second firing step will be described in detail.

The compound containing Ni, a tetravalent or higher metal element other than Nb, and optional metal element(s), for use in the first firing step is, for example, an oxide including Ni, a tetravalent or higher metal element other than Nb, and optionally other metal element(s) (for example, Co and/or Al). The oxide is obtained by, for example, stirring a metal salt solution including Ni, a tetravalent or higher metal other than Nb, and optionally other metal(s), dropping a solution of an alkali such as sodium hydroxide and adjusting the pH to an alkaline value (for example, 8.5 to 14.0) to thereby precipitate (coprecipitate) a composite hydroxide including Ni, a tetravalent or higher metal element other than Nb and optionally other metal(s), and firing the composite hydroxide. The firing temperature is not particularly limited, and is, for example, in the range of 400°C to 600°C.

The Li compound for use in the first firing step is, for example, lithium hydroxide or lithium carbonate. The Nb-containing compound for use in the first firing step is, for example, niobium oxide, lithium niobate, or niobium chloride, and is particularly preferably niobium oxide. Such raw materials are used to thereby obtain a lithium transition metal oxide imparting high battery performance.

The compound containing Ni, a tetravalent or higher metal element other than Nb, and optional metal element(s), for use in the method for producing the lithium transition metal oxide in the present embodiment, preferably include no Nb, and the Nb-containing compound preferably include no other metal element such as Ni. Such raw materials are used to thereby obtain a lithium transition metal oxide imparting high battery performance.

The mixing ratio among the compound containing Ni and optional metal element(s), the Li compound, and the Nb-containing compound in the mixture for use in the first firing step may be appropriately set, and the molar ratio of metal elements except for Li : Li is, for example, preferably in the range from 1:0.98 to 1:1.08, from the viewpoint that adjustment of each of parameters, for example, the proportion of metal element(s) other than Li present in the Li layer of the layered structure of the lithium transition metal oxide, the half width n of the diffraction peak of the (208) plane, the lattice constant a, the lattice constant c, and the crystallite size s, within the defined range, is facilitated.

The first set temperature in the first firing step is preferably in the range of 450°C or more and 680°C or less, more preferably in the range of 550°C or more and 680°C or less from the viewpoint of adjustment of each of the parameters of the lithium transition metal oxide, within the defined range. The first rate of temperature rise in the first firing step is preferably in the range of 1.5°C/min or more and 5.5°C/min or less, more preferably in the range of 2.0°C/min or more and 5.0°C/min or less from the viewpoint of adjustment of each of the parameters of the lithium transition metal oxide, within the defined range. The first rate of temperature rise may correspond to a plurality of rates set with respect to respective temperature ranges as long as such rates are each within the defined range. The firing start temperature (initial temperature) in the first firing step is, for example, in the range from room temperature to 200°C or less.

The retention time of the first set temperature in the first firing step is preferably 0 hours or more and 5 hours or less, more preferably 0 hours or more and 3 hours or less from the viewpoint of adjustment of each of the parameters of the lithium transition metal oxide, within the defined range. The retention time of the first set temperature means a time for which the first set temperature is kept after reaching the first set temperature.

The second set temperature in the second firing step is preferably in the range of more than 680°C and 800°C or less, more preferably in the range of 680°C or more and 750°C or less from the viewpoint of adjustment of each of the parameters of the lithium transition metal oxide, within the defined range. The second rate of temperature rise in the second firing step is preferably lower than the first rate of temperature rise and in the range of 0.1°C/min or more and 3.5°C/min or less, more preferably in the range of 0.2°C/min or more and 2.5°C/min or less from the viewpoint of adjustment of each of the parameters of the lithium transition metal oxide, within the defined range. The second rate of temperature rise may correspond to a plurality of rates set with respect to respective temperature ranges as long as such rates are each within the defined range. For example, in a case where the first set temperature is less than 680°C, the second rate of temperature rise may be divided into a rate A of temperature rise ranging from the first set temperature to 680°C and a rate B of temperature rise ranging from 680°C to the second set temperature. The rate B of temperature rise at the latter stage is preferably lower than the rate A of temperature rise at the former stage.

The retention time of the second set temperature in the second firing step is preferably 1 hour or more and 10 hours or less, more preferably 1 hour or more and 5 hours or less from the viewpoint of adjustment of each of the parameters of the lithium transition metal oxide, within the defined range. The retention time of the second set temperature means a time for which the second set temperature is kept after reaching the second set temperature.

The oxygen gas flow in the multistage firing step is preferably, for example, an oxygen gas flow in which the concentration of oxygen is 60% or more and the flow rate is in the range from 0.2 mL/min to 4 mL/min, per 10 cm$^3$ of the firing furnace, and 0.3 L/min or more per kg of the mixture, from the viewpoint of adjustment of each of the parameters of the lithium transition metal oxide, within the defined range. The maximum pressure applied into the firing furnace is preferably in the range of 0.1 kPa or more and 1.0 kPa or less in addition to the external pressure of the firing furnace.

Examples of the method for adhering the external additive particles including at least one metal element selected from the group consisting of W, B and Al onto surfaces of particles of the lithium transition metal oxide in the present embodiment include wet methods such as a method involving adding a solution in which a compound including at least one metal element selected from the group consisting of W, B and Al is dissolved or dispersed, into a suspension including the lithium transition metal oxide in the present embodiment, and a method involving adding (for example, spraying) a solution in which a compound including at least one metal element selected from the group consisting of W, B and Al is dissolved or dispersed, with mixing of particles of the lithium transition metal oxide in the present embodiment, and dry methods such as a method involving mixing particles of the lithium transition metal oxide in the present embodiment with particles of a compound including at least one metal element selected from the group consisting of W, B and Al.

Any of the above methods can be used to thereby adhere the external additive particles including at least one metal element selected from the group consisting of W, B and Al onto surfaces of particles of the lithium transition metal oxide in the present embodiment. Such particles of the lithium transition metal oxide, to which the external additive particles including at least one metal element selected from the group consisting of W, B and Al are adhered, are preferably, for example, heat-treated at 100°C or more and 400°C or less. If such a heat treatment is made at less than 100°C, an adhering force of the external additive particles including at least one metal element selected from the group consisting of W, B and Al may be low to result in an increase in amount of the external additive particles eliminated from surfaces of particles of the lithium transition metal oxide, and if such a heat treatment is made more than 400°C, the proportion of metal element(s) other than Li present in the Li layer of the layered structure of the lithium transition metal oxide in the present embodiment may be increased to result in deterioration in battery capacity.

Hereinafter, other material(s) included in the positive electrode active material layer will be described.

Examples of the conductive agent included in the positive electrode active material layer include carbon powders of carbon black, acetylene black, ketchen black, and graphite. These may be used singly or in combinations of two or more kinds thereof.

Examples of the binder included in the positive electrode active material layer include a fluoropolymer and a rubber-based polymer. Examples of the fluoropolymer include polytetrafluoroethylene (PTFE), polyvinylidene fluoride (PVdF), or any modified product thereof, and examples of the rubber-based polymer include an ethylene-propylene-isoprene copolymer and an ethylene-propylene-butadiene copolymer. These may be used singly or in combinations of two or more kinds thereof.

<Negative Electrode>

The negative electrode comprises, for example, a negative electrode current collector such as metal foil and a negative electrode active material layer formed on the negative electrode current collector. The negative electrode current collector which can be here used is, for example, any foil of a metal which is stable in the potential range of the negative electrode, such as copper, or any film obtained by placing such a metal on a surface layer. The negative electrode active material layer includes, for example, a negative electrode active material, a binder, a thickener, and the like.

The negative electrode is obtained by, for example, applying a negative electrode mixture slurry including a negative electrode active material, a thickener, and a binder onto a negative electrode current collector and drying the resultant, thereby forming a negative electrode active material layer on the negative electrode current collector, and rolling the negative electrode active material layer.

The negative electrode active material included in the negative electrode active material layer is not particularly limited as long as the material can occlude and release lithium ions, and examples thereof include a carbon material, a metal which can form an alloy together with lithium, or an alloy compound including such a metal. The carbon material which can be here used is, for example, any of graphites such as natural graphite, non-graphitizable carbon and artificial graphite, and cokes, and examples of the alloy compound include any compound including at least one metal which can form an alloy together with lithium. Such an element which can form an alloy together with lithium is preferably silicon or tin, and silicon oxide, tin oxide or the like obtained by binding such an element to oxygen can also be used. A mixed product of the carbon material with a silicon or tin compound can be used. Any other than the above can also be used where the charge/discharge potential to metallic lithium such as lithium titanate is higher than that of the carbon material or the like.

The binder included in the negative electrode active material layer, which can be here used, is for example, a fluoropolymer or a rubber-based polymer, as in the case of the positive electrode, and a styrene-butadiene copolymer (SBR) or a modified product thereof may also be used. The binder included in the negative electrode active material layer, which can be here used, is for example, a fluororesin, PAN, a polyimide-based resin, an acrylic resin, or a polyolefin-based resin, as in the case of the positive electrode. In a case where the negative electrode mixture slurry is prepared by use of an aqueous solvent, styrene-butadiene rubber (SBR), CMC or a salt thereof, polyacrylic acid (PAA) or a salt thereof (PAA-Na, PAA-K or the like, alternatively, a partially neutralized salt may be adopted), polyvinyl alcohol (PVA), or the like is preferably used.

Examples of the thickener included in the negative electrode active material layer include carboxymethylcellulose (CMC) and polyethylene oxide (PEO). These may be used singly or in combinations of two or more kinds thereof.

<Non-Aqueous Electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolytic solution), and may be a solid electrolyte using a gel-like polymer or the like. The non-aqueous solvent which can be used is, for example, any of esters, ethers, nitriles such as acetonitrile, amides such as dimethylformamide, and a mixed solvent of two or more kinds thereof. The non-aqueous solvent may contain a halogen-substituted product obtained by at least partially replacing hydrogen in such a solvent with a halogen atom such as fluorine.

Examples of the esters include cyclic carbonates such as ethylene carbonate (EC), propylene carbonate (PC) and butylene carbonate, linear carbonates such as dimethyl carbonate (DMC), ethyl methyl carbonate (EMC), diethyl carbonate (DEC), methyl propyl carbonate, ethyl propyl carbonate and methyl isopropyl carbonate, cyclic carboxylates such as $\gamma$-butyrolactone (GBL) and $\gamma$-valerolactone (GVL), and linear carboxylates such as methyl acetate, ethyl acetate, propyl acetate, methyl propionate (MP), ethyl propionate and $\gamma$-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol and crown ether, and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

Any of a fluorinated cyclic carbonate such as fluoroethylene carbonate (FEC), a fluorinated linear carbonate, and a fluorinated linear carboxylate such as methyl fluoropropionate (FMP) is preferably used as the halogen-substituted product.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ ($1 < x < 6$ and n is 1 or 2), $LiB_{10}Cl_{10}$, LiCl, LiBr, LiI, lithium chloroborane, lithium lower aliphatic carboxylate, borates such as $Li_2B_4O_7$ and $Li(B(C_2O_4)F_2)$, and imide salts such as $LiN(SO_2CF_3)_2$, $LiN(C_lF_{2l+1}SO_2)(C_mF_{2m+1}SO_2)$ {l and m are each an integer of 0 or more}. Such lithium salts may be used singly or in combinations of two or more kinds thereof. In particular, $LiPF_6$ is preferably used from the viewpoints of ion conductivity, electrochemical stability, and the like. The concentration of the lithium salt is preferably 0.8 to 1.8 mol per liter of the non-aqueous solvent.

<Separator>

The separator here used is, for example, a porous sheet having ion permeability and insulating properties. Examples of the porous sheet include a microporous thin film, a woven cloth, and an unwoven cloth. The material of the separator is suitably an olefin-based resin such as polyethylene or polypropylene, cellulose, or the like. The separator here used may be a stacked article having a cellulose fiber layer and a thermoplastic resin fiber layer of an olefin-based resin or the like, or may be one obtained by applying an aramid resin or the like to the surface of the separator. A filler layer including an inorganic filler may also be formed at the interface between the separator and at least one of the positive electrode and the negative electrode. Examples of the inorganic filler include an oxide containing at least one of titanium (Ti), aluminum (Al), silicon (Si) and magnesium (Mg), a phosphoric acid compound, and such a compound whose surface is treated with a hydroxide or the like. The filler layer can be formed by, for example, applying a slurry containing the filler onto the surface of the positive electrode, the negative electrode or the separator.

EXAMPLES

Hereinafter, the present invention will be further described with reference to Examples, but the present invention is not intended to be limited to such Examples.

<Example 1>

[Production of Positive Electrode Active Material]

A composite oxide including Ni, Co, Al and Mn ($Ni_{0.91}C0_{0.01}Al_{0.04}Mn_{0.04}O_2$), LiOH, and $Nb_2O_3$ were mixed so that the molar ratio of the total amount of Ni, Nb, Co, Al and Mn, and the amount of Li was 1:1.03, thereby obtaining a mixture. The mixture was loaded into a firing furnace, and the mixture was fired from room temperature to 650°C at a rate of temperature rise of 2.0°C/min and then fired from 650°C to 710°C at a rate of temperature rise of 0.5°C/min under an oxygen gas flow (flow rates of 2 mL/min per 10 $cm^3$ and 5 L/min per kg of the mixture) where the concentration of oxygen was 95%. The fired product was washed with water, thereby obtaining a lithium transition metal oxide. The lithium transition metal oxide was adopted as a lithium transition metal oxide of Example 1. The respective proportions of Ni, Co, Al, Mn, and Nb in the lithium transition metal oxide of Example 1 were as described in Table 1.

The lithium transition metal oxide of Example 1 was subjected to powder X-ray diffraction measurement in the above-mentioned conditions, thereby obtaining an X-ray diffraction pattern. As a result, a diffraction line indicating a layered structure was confirmed, the proportion of metal element(s) other than Li present in the Li layer was 1.8 mol%, the half width of the diffraction peak of the (208) plane was 0.48°, the lattice constant a was 2.872 Å, the lattice constant c was 14.20 Å, and the crystallite size s was 459 Å.

Pure water was added to particles of the lithium transition metal oxide of Example 1, the resultant was stirred and then subjected to filtration/separation, thereby preparing the lithium transition metal oxide having a water content adjusted to 5%, a $WO_3$ powder was added thereto so that the proportion of the W element relative to the lithium transition metal oxide was 0.1 mol%, and thereafter the resultant was heat-treated at 180°C. The resulting powder was analyzed by SEM-EDX, and thus it was confirmed that particles including tungsten were adhered onto surfaces of particles of the lithium transition metal oxide. The powder was adopted as a positive electrode active material of Example 1.

<Example 2>

A lithium transition metal oxide was produced in the same manner as in Example 1 except that the $WO_3$ powder was changed to a $H_3BO_3$ powder in the method for producing the positive electrode active material of Example 1. The respective proportions of Ni, Co, Al, Mn, and Nb in the lithium transition metal oxide of Example 2 were as described in Table 1. The lithium transition metal oxide of Example 2 was subjected to powder X-ray diffraction measurement, and as a result, a diffraction line indicating a layered structure was confirmed, the proportion of metal element(s) other than Li present in the Li layer was 1.6 mol%, and the half width of the diffraction peak of the (208) plane was 0.45°.

The resulting powder was analyzed by SEM-EDX, and thus it was confirmed that particles including boron were adhered onto surfaces of particles of the lithium transition metal oxide. The powder was adopted as a positive electrode active material of Example 2.

<Example 3>

A lithium transition metal oxide was produced in the same manner as in Example 1 except that the $WO_3$ powder was changed to an $Al_2(SO_4)_3$ powder in the method for producing the positive electrode active material of Example 1. The respective proportions of Ni, Co, Al, Mn, and Nb in the lithium transition metal oxide of Example 3 were as described in Table 1. The lithium transition metal oxide of Example 3 was subjected to powder X-ray diffraction measurement, and as a result, a diffraction line indicating a layered structure was confirmed, the proportion of metal element(s) other than Li present in the Li layer was 2.2 mol%, and the half width of the diffraction peak of the (208) plane was 0.48°.

The resulting powder was analyzed by SEM-EDX, and thus it was confirmed that particles including aluminum were adhered onto surfaces of particles of the lithium transition metal oxide. The powder was adopted as a positive electrode active material of Example 3.

<Example 4>

A lithium transition metal oxide was produced in the same manner as in Example 1 except that not only the $WO_3$ powder was added, but also an $Al_2(SO_4)_3$ powder was added so that the proportion of an Al element relative to the lithium transition metal oxide was 0.05 mol%, in the method for producing the positive electrode active material of Example 1. The respective proportions of Ni, Co, Al, Mn, and Nb in the lithium transition metal oxide of Example 4 were as described in Table 1. The lithium transition metal oxide of Example 4 was subjected to powder X-ray diffraction measurement, and as a result, a diffraction line indicating a layered structure was confirmed, the proportion of metal element(s) other than Li present in the Li layer was 2.3 mol%, and the half width of the diffraction peak of the (208) plane was 0.49°.

The resulting powder was analyzed by SEM-EDX, and thus it was confirmed that particles including tungsten and particles including aluminum were adhered onto surfaces of particles of the lithium transition metal oxide. The powder was adopted as a positive electrode active material of Example 4.

<Example 5>

A lithium transition metal oxide was produced in the same manner as in Example 1 except that not only the $WO_3$ powder was added, but also a $H_3BO_3$ powder was added so that the proportion of a B element relative to the lithium transition metal oxide was 0.1 mol% and an $Al_2(SO_4)_3$ powder was added so that the proportion of an Al element relative to the lithium transition metal oxide was 0.05 mol%, in the method for producing the positive electrode active material of Example 1. The respective proportions of Ni, Co, Al, Mn, and Nb in the lithium transition metal oxide of Example 5 were as described in Table 1. The lithium transition metal oxide of Example 5 was subjected to powder X-ray diffraction measurement, and as a result, a diffraction line indicating a layered structure was confirmed, the proportion of metal element(s) other than Li present in the Li layer was 2.4 mol%, and the half width of the diffraction peak of the (208) plane was 0.5°.

The resulting powder was analyzed by SEM-EDX, and thus it was confirmed that particles including tungsten, particles including boron, and particles including aluminum were adhered onto surfaces of particles of the lithium transition metal oxide. The powder was adopted as a positive electrode active material of Example 5.

<Example 6>

A lithium transition metal oxide was produced in the same manner as in Example 1 except that not only the $WO_3$ powder was added, but also a $H_3BO_3$ powder was added so that the proportion of a B element relative to the lithium transition metal oxide was 0.1 mol%, in the method for producing the positive electrode active material of Example 1. The respective proportions of Ni, Co, Al, Mn, and Nb in the lithium transition metal oxide of Example 6 were as described in Table 1. The lithium transition metal oxide of Example 6 was subjected to powder X-ray diffraction measurement, and as a result, a diffraction line indicating a layered structure was confirmed, the proportion of metal element(s) other than Li present in the Li layer was 2 mol%, and the half width of the diffraction peak of the (208) plane was 0.44°.

The resulting powder was analyzed by SEM-EDX, and thus it was confirmed that particles including tungsten and particles including boron were adhered onto surfaces of particles of the lithium transition metal oxide. The powder was adopted as a positive electrode active material of Example 6.

<Example 7>

A lithium transition metal oxide was produced in the same manner as in Example 1 except that the $WO_3$ powder was changed to a $H_3BO_3$ powder and the $H_3BO_3$ powder was added so that the proportion of a B element relative to the lithium transition metal oxide was 0.01 mol%, in the method for producing the positive electrode active material of Example 1. The respective proportions of Ni, Co, Al, Mn, and Nb in the lithium transition metal oxide of Example 7 were as described in Table 1. The lithium transition metal oxide of Example 7 was subjected to powder X-ray diffraction measurement, and as a result, a diffraction line indicating a layered structure was confirmed, the proportion of metal element(s) other than Li present in the Li layer was 1.5 mol%, and the half width of the diffraction peak of the (208) plane was 0.43°.

The resulting powder was analyzed by SEM-EDX, and thus it was confirmed that particles including boron were adhered onto surfaces of particles of the lithium transition metal oxide. The powder was adopted as a positive electrode active material of Example 7.

<Example 8>

A lithium transition metal oxide was produced in the same manner as in Example 1 except that a composite oxide including Ni, Co, Al and Mn ($Ni_{0.91}Co_{0.01}Al_{0.04}Mn_{0.04}O_2$), LiOH, and $Nb_2O_3$ were mixed so that the molar ratio of the total amount of Ni, Nb, Co, Al and Mn, and the amount of Li was 1:1.03, and the molar ratio of the total amount of Ni, Co, Al and Mn in the composite oxide including Ni, Co, Al and Mn, and the amount of Nb was 100:0.05. The respective proportions of Ni, Co, Al, Mn, and Nb in the lithium transition metal oxide of Example 8 were as described in Table 1. The lithium transition metal oxide of Example 8 was subjected to powder X-ray diffraction measurement, and as a result, a diffraction line indicating a layered structure was confirmed, the proportion of metal element(s) other than Li present in the Li layer was 1.7 mol%, and the half width of the diffraction peak of the (208) plane was 0.39°.

Particles of the lithium transition metal oxide of Example 8 were heat-treated at 180°C after addition of the $WO_3$ powder in the same manner as in Example 1. The resulting powder was analyzed by SEM-EDX, and thus it was confirmed that particles including tungsten were adhered onto surfaces of particles of the lithium transition metal oxide. The powder was adopted as a positive electrode active material of Example 8.

<Example 9>

A lithium transition metal oxide was produced in the same manner as in Example 1 except that a composite oxide including Ni, Co, Al and Mn ($Ni_{0.905}Co_{0.015}Al_{0.05}Mn_{0.03}O_2$), LiOH, and $Nb_2O_3$ were mixed so that the molar ratio of the total amount of Ni, Nb, Co, Al and Mn, and the amount of Li was 1:1.03. The respective proportions of Ni, Co, Al, Mn, and Nb in the lithium transition metal oxide of Example 9 were as described in Table 1. The lithium transition metal oxide of Example 9 was subjected to powder X-ray diffraction measurement, and as a result, a diffraction line indicating a layered structure was confirmed, the proportion of metal element(s) other than Li present in the Li layer was 1.4 mol%, and the half width of the diffraction peak of the (208) plane was 0.47°.

Particles of the lithium transition metal oxide of Example 9 were heat-treated at 180°C after addition of the $WO_3$ powder in the same manner as in Example 1. The resulting powder was analyzed by SEM-EDX, and thus it was confirmed that particles including tungsten were adhered onto surfaces of particles of the lithium transition metal oxide. The powder was adopted as a positive electrode active material of Example 9.

<Example 10>

A lithium transition metal oxide was produced in the same manner as in Example 1 except that a composite oxide including Ni, Co, Al and Mn ($Ni_{0.915}Co_{0.01}Al_{0.5}Mn_{0.025}O_2$), LiOH, and $Nb_2O_3$ were mixed so that the molar ratio of the total amount of Ni, Nb, Co, Al and Mn, and the amount of Li was 1:1.03. The respective proportions of Ni, Co, Al, Mn, and Nb in the lithium transition metal oxide of Example 10 were as described in Table 1. The lithium transition metal oxide of Example 10 was subjected to powder X-ray diffraction measurement, and as a result, a diffraction line indicating a layered structure was confirmed, the proportion of metal element(s) other than Li present in the Li layer was 1.6 mol%, and the half width of the diffraction peak of the (208) plane was 0.5°.

Particles of the lithium transition metal oxide of Example 10 were heat-treated at 180°C after addition of the $WO_3$ powder in the same manner as in Example 1. The resulting powder was analyzed by SEM-EDX, and thus it was confirmed that particles including tungsten were adhered onto surfaces of particles of the lithium transition metal oxide. The powder was adopted as a positive electrode active material of Example 10

<Example 11>

A lithium transition metal oxide was produced in the same manner as in Example 1 except that a composite oxide including Ni, Co, Al and Mn ($Ni_{0.92}Al_{0.05}Mn_{0.03}O_2$), LiOH, and $LiNbO_3$ were mixed so that the molar ratio of the total amount of Ni, Nb, Al and Mn, and the amount of Li was 1:1.03. The respective proportions of Ni, Al, Mn, and Nb in Example 11 were as described in Table 1. The lithium transition metal oxide of Example 11 was subjected to powder X-ray diffraction measurement, and as a result, a diffraction line indicating a layered structure was confirmed, the proportion of metal element(s) other than Li present in the Li layer was 1.8 mol%, and the half width of the diffraction peak of the (208) plane was 0.38°.

Particles of the lithium transition metal oxide of Example 11 were heat-treated at 180°C after addition of the $WO_3$ powder in the same manner as in Example 1. The resulting powder was analyzed by SEM-EDX, and thus it was confirmed that particles including tungsten were adhered onto surfaces of particles of the lithium transition metal oxide. The powder was adopted as a positive electrode active material of Example 11.

<Comparative Example 1>

A lithium transition metal oxide was produced in the same manner as in Example 1 except that no $WO_3$ powder was added in the method for producing the positive electrode active material of Example 1. The respective proportions of Ni, Co, Al, Mn, and Nb in the lithium transition metal oxide of Comparative Example 1 were as described in Table 1. The lithium transition metal oxide of Comparative Example 1 was subjected to powder X-ray diffraction measurement, and as a result, a diffraction line indicating a layered structure was confirmed, the proportion of metal element(s) other than Li present in the Li layer was 2.8 mol%, the half width of the diffraction peak of the (208) plane was 0.48°, the lattice constant a was 2.873 Å, the lattice constant c was 14.20 Å, and the crystallite size s was 488 Å. The lithium transition metal oxide of Comparative Example 1 was adopted as a positive electrode active material of Comparative Example 1.

<Comparative Example 2>

A positive electrode active material was produced in the same manner as in Example 1 except that a composite oxide including Ni, Co, Al and Mn ($Ni_{0.91}Co_{0.01}Al_{0.04}Mn_{0.04}O_2$), and LiOH were mixed so that the molar ratio of the total amount of Ni, Co, Al and Mn, and the amount of Li was 1:1.03, and no $WO_3$ powder was added. The respective proportions of Ni, Co, Al, and Mn in the lithium transition metal oxide of Comparative Example 2 were as described in Table 1. The lithium transition metal oxide Comparative Example 2 was subjected to powder X-ray diffraction measurement, and as a result, a diffraction line indicating a layered structure was confirmed, the proportion of metal element(s) other than Li present in the Li layer was 1.6 mol%, the half width of the diffraction peak of the (208) plane was 0.41°, the lattice constant a was 2.872 Å, the lattice constant c was 14.20 Å, and the crystallite size s was 479 Å. Pure water was added to particles of the lithium transition metal oxide of Comparative Example 2, the resultant was stirred and then subjected to filtration/separation, thereby preparing the lithium transition metal oxide having a water content adjusted to 5%, and the lithium transition metal oxide was heat-treated at 180°C. The lithium transition metal oxide was adopted as a positive electrode active material of Comparative Example 2.

<Comparative Example 3>

A lithium transition metal oxide was produced in the same manner as in Example 9 except that no $WO_3$ powder was added in the method for producing the positive electrode active material of Example 9. The respective proportions of Ni, Co, Al, Mn, and Nb in the lithium transition metal oxide of Comparative Example 3 were as described in Table 1. The lithium transition metal oxide of Comparative Example 3 was subjected to powder X-ray diffraction measurement, and as a result, a diffraction line indicating a layered structure was confirmed, the proportion of metal element(s) other than Li present in the Li layer was 1.8 mol%, and the half width of the diffraction peak of the (208) plane was 0.42°. The lithium transition metal oxide of Comparative Example 3 was adopted as a positive electrode active material of Comparative Example 3.

<Comparative Example 4>

A positive electrode active material was produced in the same manner as in Example 9 except that a composite oxide including Ni, Co, Al and Mn ($Ni_{0.905}Co_{0.015}Al_{0.05}Mn_{0.03}O_2$) and LiOH were mixed so that the molar ratio of the total amount of Ni, Co, Al and Mn, and the amount of Li was 1:1.03, and no $WO_3$ powder was added. The respective proportions of Ni, Co, Al, and Mn in the lithium transition metal oxide of Comparative Example 4 were as described in Table 1. The lithium transition metal oxide of Comparative Example 4 was subjected to powder X-ray diffraction measurement, and as a result, a diffraction line indicating a layered structure was confirmed, the proportion of metal element(s) other than Li present in the Li layer was 1.5 mol%, and the half width of the diffraction peak of the (208) plane was 0.39°. Pure water was added to particles of the lithium transition metal oxide of Comparative Example 4, the resultant was stirred and then subjected to filtration/separation, thereby preparing the lithium transition metal oxide having a water content adjusted to 5%, and the lithium transition metal oxide was heat-treated at 180°C. The lithium transition metal oxide was adopted as a positive electrode active material of Comparative Example 4.

<Comparative Example 5>

A lithium transition metal oxide was produced in the same manner as in Example 10 except that no $WO_3$ powder was added in the method for producing the positive electrode active material of Example 10. The respective proportions of Ni, Co, Al, Mn, and Nb in the lithium transition metal oxide of Comparative Example 5 were as described in Table 1. The lithium transition metal oxide of Comparative Example 5 was subjected to powder X-ray diffraction measurement, and as a result, a diffraction line indicating a layered structure was confirmed, the proportion of metal element(s) other than Li present in the Li layer was 1.2 mol%, and the half width of the diffraction peak of the (208) plane was 0.44°. The lithium transition metal oxide of Comparative Example 5 was adopted as a positive electrode active material of Comparative Example 5.

<Comparative Example 6>

A lithium transition metal oxide was produced in the same manner as in Example 11 except that no $WO_3$ powder was added in the method for producing the positive electrode active material of Example 11. The respective proportions of Ni, Co, Al, Mn, and Nb in the lithium transition metal oxide of Comparative Example 6 were as described in Table 1. The lithium transition metal oxide of Comparative Example 6 was subjected to powder X-ray diffraction measurement, and as a result, a diffraction line indicating a layered structure was confirmed, the proportion of metal element(s) other than Li present in the Li layer was 1.8 mol%, and the half width of the diffraction peak of the (208) plane was 0.48°. The lithium transition metal oxide of Comparative Example 6 was adopted as a positive electrode active material of Comparative Example 6.

<Reference Example 1>

Pure water was added to particles of the lithium transition metal oxide of Example 1, the resultant was stirred and then subjected to filtration/separation, thereby preparing the lithium transition metal oxide having a water content adjusted to 5%, a $WO_3$ powder was added thereto so that the proportion of a W element relative to the lithium transition metal oxide was 0.3 mol%, and thereafter the resultant was heat-treated at 180°C. The resulting powder was analyzed by SEM-EDX, and thus it was confirmed that particles including tungsten were adhered onto surfaces of particles of the lithium transition metal oxide. The powder was adopted as a positive electrode active material of Reference Example 1.

<Reference Example 2>

Pure water was added to particles of the lithium transition metal oxide of Example 1, the resultant was stirred and then subjected to filtration/separation, thereby preparing the lithium transition metal oxide having a water content adjusted to 5%, a $WO_3$ powder was added thereto so that the proportion of a W element relative to the lithium transition metal oxide was 0.4 mol%, and thereafter the resultant was heat-treated at 180°C. The resulting powder was analyzed by SEM-EDX, and thus it was confirmed that particles including tungsten were adhered onto surfaces of particles of the lithium transition metal oxide. The powder was adopted as a positive electrode active material of Reference Example 2.

<Reference Example 3>

A lithium transition metal oxide was produced in the same manner as in Example 1 except that a composite oxide including Ni, Co, Al and Mn ($Ni_{0.925}Co_{0.01}Al_{0.055}Mn_{0.01}O_2$), LiOH, and $Nb_2O_3$ were mixed so that the molar ratio of the total amount of Ni, Nb, Co, Al and Mn, and the amount of Li was 1:1.03, and the molar ratio of the total amount of Ni, Co, Al and Mn in the composite oxide including Ni, Co, Al and Mn, and the amount of Nb was 100:0.5. The respective proportions of Ni, Co, Al, Mn, and Nb in the lithium transition metal oxide of Reference Example 3 were as described in Table 3. The lithium transition metal oxide of Reference Example 3 was subjected to powder X-ray diffraction measurement, and as a result, a diffraction line indicating a layered structure was confirmed, the proportion of metal element(s) other than Li present in the Li layer was 2.2 mol%, and the half width of the diffraction peak of the (208) plane was 0.53°. Particles of the lithium transition metal oxide of Reference Example 3 were heat-treated at 180°C after addition of the $WO_3$ powder in the same manner as in Example 1. The resulting powder was analyzed by SEM-EDX, and thus it was confirmed that particles including tungsten were adhered onto surfaces of particles of the lithium transition metal oxide. The powder was adopted as a positive electrode active material of Reference Example 3.

[Production of Positive Electrode]

Ninety five parts by mass of the positive electrode active material of Example 1, 3 parts by mass of acetylene black as a conductive agent, and 2 parts by mass of polyvinylidene fluoride as a binding agent were mixed. The mixture was kneaded with a kneader (T.K. HIVIS MIX, manufactured by PRIMIX Corporation), thereby preparing a positive electrode mixture slurry. Next, the positive electrode mixture slurry was applied to aluminum foil having a thickness of 15 μm, and a coating film was dried, thereby forming a positive electrode active material layer on the aluminum foil. The resultant was adopted as a positive electrode of Example 1.

[Preparation of Non-Aqueous Electrolyte]

Ethylene carbonate (EC), methyl ethyl carbonate (MEC) and dimethyl carbonate (DMC) were mixed at a volume ratio of 3:3:4. Lithium hexafluorophosphate ($LiPF_6$) was dissolved in such a mixed solvent so that the concentration was 1.2 mol/L, and thus a non-aqueous electrolyte was prepared.

[Production of Test Cell]

The positive electrode of Example 1 and a negative electrode made of lithium metal foil were stacked so that such electrodes were opposite to each other with a separator being interposed therebetween, and the resultant was wound, thereby producing an electrode assembly. Next, the electrode assembly and the non-aqueous electrolyte were inserted into an outer package made of aluminum, thereby producing a test cell.

The same manner was conducted to produce each test cell also in Examples 2 to 11, Comparative Examples 1 to 6, and Reference Examples 1 to 3.

(Evaluation of Battery Resistance at Low Temperature)

After each of the test cells of Examples, Comparative Examples and Reference Examples was charged to one-half the initial capacity at a constant current of 0.5 It under an environmental temperature of -10°C, the charge was terminated and such each test cell was left to still stand for 15 minutes. Thereafter, the voltage in charge at a constant current of 0.1 It for 10 seconds was measured. After discharge corresponding to the charge capacity for 10 seconds was performed, the current value was changed, the charge was performed for 10 seconds and the voltage here was measured, and thereafter discharge corresponding to the charge capacity for 10 seconds was performed. The charge/discharge and the voltage measurement were repeated at a current value of 0.1 It to 2 It. The battery resistance was determined from a relationship between the voltage value and current value measured.

(Evaluation of Battery Capacity)

Each of the test cells of Example 1 and Reference Examples 1 to 3 was charged at a constant current of 1 It under an environmental temperature of 25°C until the battery voltage reached 4.2 V, and thereafter discharged at a constant current of 1 It until the battery voltage reached 2.5 V, and the discharge capacity (battery capacity) was determined.

The evaluation results of the battery resistance at a low temperature in each of Examples and each of Comparative Examples are shown in Table 1. The evaluation results of the battery resistance at a low temperature and the battery capacity in Example 1, and Reference Examples 1 and 2 are shown in Table 2. The evaluation results of the battery capacity in Example 1 and Reference Example 3 are shown in Table 3.

[Table 1]

| | Composition of lithium transition metal oxide / (mol%) | | | | | Elements included in external additive particles / (mol%) | | | Amount of other element(s) present in Li layer / (mol%) | Half width of (208) plane / (deg) | Battery resistance at low temperature / (Ω) |
|---|---|---|---|---|---|---|---|---|---|---|---|
| | Ni | Co | Al | Mn | Nb | w | B | Al | | | |
| Example 1 | 90.75 | 1 | 4 | 4 | 0.25 | 0.1 | - | - | 1.8 | 0.48 | 356 |
| Example 2 | 90.75 | 1 | 4 | 4 | 0.25 | - | 0.1 | - | 1.6 | 0.45 | 218 |
| Example 3 | 90.75 | 1 | 4 | 4 | 0.25 | - | - | 0.1 | 2.2 | 0.48 | 288 |
| Example 4 | 90.75 | 1 | 4 | 4 | 0.25 | 0.1 | - | 0.05 | 2.3 | 0.49 | 378 |
| Example 5 | 90.75 | 1 | 4 | 4 | 0.25 | 0.1 | 0.1 | 0.05 | 2.4 | 0.5 | 231 |
| Example 6 | 90.75 | 1 | 4 | 4 | 0.25 | 0.1 | 0.1 | - | 2 | 0.44 | 187 |
| Example 7 | 90.75 | 1 | 4 | 4 | 0.25 | - | 0.01 | - | 1.5 | 0.43 | 512 |
| Example 8 | 90.95 | 1 | 4 | 4 | 0.05 | 0.1 | - | - | 1.7 | 0.39 | 427 |
| Example 9 | 90.25 | 1.5 | 5 | 3 | 0.25 | 0.1 | - | - | 1.4 | 0.47 | 264 |
| Example 10 | 91.25 | 1 | 5 | 2.5 | 0.25 | 0.1 | - | - | 1.6 | 0.5 | 291 |
| Example 11 | 91.75 | 0 | 5 | 3 | 0.25 | 0.1 | - | - | 1.8 | 0.38 | 418 |
| Comparative Example 1 | 90.75 | 1 | 4 | 4 | 0.25 | - | - | - | 2.8 | 0.48 | 946 |
| Comparative Example 2 | 91 | 1 | 4 | 4 | - | - | - | - | 1.6 | 0.41 | 1258 |
| Comparative Example 3 | 90.25 | 1.5 | 5 | 3 | 0.25 | - | - | - | 1.8 | 0.42 | 679 |
| Comparative Example 4 | 90.5 | 1.5 | 5 | 3 | - | - | - | - | 1.5 | 0.39 | 825 |

(continued)

| | Composition of lithium transition metal oxide / (mol%) | | | | | Elements included in external additive particles / (mol%) | | | Amount of other element(s) present in Li layer / (mol%) | Half width of (208) plane / (deg) | Battery resistance at low temperature / (Ω) |
|---|---|---|---|---|---|---|---|---|---|---|---|
| | Ni | Co | Al | Mn | Nb | w | B | Al | | | |
| Comparative Example 5 | 91.25 | 1 | 5 | 2.5 | 0.25 | - | - | - | 1.2 | 0.44 | 879 |
| Comparative Example 6 | 91.75 | 0 | 5 | 3 | 0.25 | - | - | - | 1.8 | 0.48 | 1413 |

[Table 2]

| | Composition of lithium transition metal oxide / (mol%) | | | | | Element included in external additive particles / (mol%) | | | Battery resistance at low temperature / (Ω) | Battery capacity / (mAh/g) |
|---|---|---|---|---|---|---|---|---|---|---|
| | Ni | Co | Al | Mn | Nb | w | B | Al | | |
| Example 1 | 90.75 | 1 | 4 | 4 | 0.25 | 0.1 | - | - | 356 | 216 |
| Reference Example 1 | 90.75 | 1 | 4 | 4 | 0.25 | 0.3 | - | - | 323 | 209 |
| Reference Example 2 | 90.75 | 1 | 4 | 4 | 0.25 | 0.4 | - | - | 308 | 206 |

[Table 3]

| | Composition of lithium transition metal oxide / (mol%) | | | | | Element included in external additive particles / (mol%) | | | Amount of other element(s) present in Li layer / (mol%) | Half width of (208) plane / (deg) | Battery capacity / (mAh/g) |
|---|---|---|---|---|---|---|---|---|---|---|---|
| | Ni | Co | Al | Mn | Nb | w | B | Al | | | |
| Example 1 | 90.75 | 1 | 4 | 4 | 0.25 | 0.1 | - | - | 1.8 | 0.48 | 216 |
| Reference Example 3 | 92 | 1 | 5.5 | 1 | 0.5 | 0.1 | - | - | 2.2 | 0.53 | 208 |

As clear from Table 1, Examples 1 to 11, in which the external additive particles including at least one element selected from the group consisting of W, B and Al were adhered onto surfaces of particles of the lithium transition metal oxide including Ni, Nb, and the tetravalent or higher metal element other than Nb, were each low in battery resistance at a low temperature, as compared with Comparative Examples 1 to 6, in which the external additive particles including at least one element selected from the group consisting of W, B and Al were not adhered onto surfaces of particles of the lithium transition metal oxide including Ni, Nb, and the tetravalent or higher metal element other than Nb. As clear from Table 2, an increase in content of tungsten included in the external additive particles resulted in a decrease in battery resistance at a low temperature, but resulted in also deterioration in battery capacity. As clear from Table 3, in a case where the half width of the diffraction peak of the (208) plane of the lithium transition metal oxide was 0.5° or more, the battery capacity was deteriorated.

**Claims**

1. A positive electrode active material for a non-aqueous electrolyte secondary battery, having:

a lithium transition metal oxide having a layered structure and including Ni, Nb, a tetravalent or higher metal element other than Nb, which is Mn, and optionally Co; and

external additive particles including at least one element selected from the group consisting of W, B and Al and adhered onto surfaces of particles of the lithium transition metal oxide, wherein

a proportion of Ni is in the range of 90 mol% $\leq$ Ni < 100 mol% relative to the total amount of metal elements except for Li in the lithium transition metal oxide,

a proportion of Nb is in the range of 0 mol% < Nb $\leq$ 3 mol% relative to the total amount of metal elements except for Li in the lithium transition metal oxide,

a proportion of Co is in the range of Co $\leq$ 2 mol% relative to the total amount of metal elements except for Li in the lithium transition metal oxide,

a proportion of metal element(s) other than Li present in a Li layer of the layered structure is in the range of 1 mol% or more and 2.5 mol% or less relative to the total amount of metal elements except for Li in the lithium transition metal oxide, as measured according to the method of the description,

a half width n of a diffraction peak of the (208) plane of the lithium transition metal oxide, in an X-ray diffraction pattern with X-ray diffraction acquired according to the description, is 0.30° $\leq$ n $\leq$ 0.50°, and

a proportion of W, B and Al in the external additive particles is 0.01 mol% or more and 0.3 mol% or less relative to the total amount of the lithium transition metal oxide.

2. The positive electrode active material for a non-aqueous electrolyte secondary battery according to claim 1, wherein a crystal structure of the lithium transition metal oxide, determined from the result of analysis of an X-ray diffraction pattern with X-ray diffraction acquired according to the description, has a lattice constant a representing an a-axis length, in the range of 2.870 Å $\leq$ a $\leq$ 2.877 Å, and a lattice constant c representing a c-axis length, in the range of 14.18 Å $\leq$ c $\leq$ 14.21 Å.

3. The positive electrode active material for a non-aqueous electrolyte secondary battery according to claim 1 or 2, wherein the lithium transition metal oxide has a crystallite size s in the range of 400 Å $\leq$ s $\leq$ 700 Å, as calculated from a half width of a diffraction peak of the (104) plane, in an X-ray diffraction pattern with X-ray diffraction acquired according to the description, according to the Scherrer's equation.

4. A non-aqueous electrolyte secondary battery comprising a positive electrode including the positive electrode active material for a non-aqueous electrolyte secondary battery according to any one of claims 1 to 3.

**Patentansprüche**

1. Aktives Material für eine positive Elektrode für eine Sekundärbatterie mit wasserfreiem Elektrolyt, aufweisend:

ein Lithium-Übergangsmetalloxid, das eine Schichtstruktur aufweist und Ni, Nb, ein anderes Metallelement als Nb mit einer Wertigkeit von mindestens vier, welches Mn ist, und wahlweise Co enthält; und

externe Additivteilchen, die mindestens ein Element ausgewählt aus der Gruppe bestehend aus W, B und Al enthalten und an Oberflächen von Teilchen des Lithium-Übergangsmetalloxids haften, wobei

ein Anteil von Ni im Bereich von 90 Mol-% $\leq$ Ni < 100 Mol-%, bezogen auf die Gesamtmenge der Metallelemente mit Ausnahme von Li im Lithium-Übergangsmetalloxid, liegt,

ein Anteil von Nb im Bereich von 0 Mol-% < Nb $\leq$ 3 Mol-%, bezogen auf die Gesamtmenge der Metallelemente mit Ausnahme von Li in dem Lithium-Übergangsmetalloxid, liegt,

ein Anteil von Co im Bereich von Co $\leq$ 2 Mol-%, bezogen auf die Gesamtmenge der Metallelemente mit Ausnahme von Li im Lithium-Übergangsmetalloxid, liegt,

ein Anteil von Metallelement(en) außer Li, das/die in einer Li-Schicht der Schichtstruktur vorhanden ist/sind, im Bereich von 1 Mol-% oder mehr und 2,5 Mol-% oder weniger liegt/liegen, bezogen auf die Gesamtmenge der Metallelemente mit Ausnahme von Li im Lithium-Übergangsmetalloxid, gemessen nach dem Verfahren der Beschreibung,

eine Halbwertsbreite n eines Beugungspeaks der (208)-Ebene des Lithium-Übergangsmetalloxids in einem Röntgenbeugungsmuster mit Röntgenbeugung, das gemäß der Beschreibung aufgenommen wurde, 0,30° $\leq$ n $\leq$ 0,50° beträgt, und

ein Anteil von W, B und Al in den externen Additivteilchen 0,01 Mol-% oder mehr und 0,3 Mol-% oder weniger, bezogen auf die Gesamtmenge des Lithium-Übergangsmetalloxids, beträgt.

2. Aktives Material für eine positive Elektrode für eine Sekundärbatterie mit wasserfreiem Elektrolyt nach Anspruch 1, wobei eine Kristallstruktur des Lithium-Übergangsmetalloxids, die aus dem Ergebnis der Analyse eines Röntgenbeugungsmusters mit Röntgenbeugung, das gemäß der Beschreibung erhalten wurde, bestimmt wurde, eine Gitterkonstante a, die eine a-Achsenlänge darstellt, im Bereich von 2,870 Å $\leq$ a $\leq$ 2,877 Å, und eine Gitterkonstante c, die eine c-Achsenlänge darstellt, im Bereich von 14,18 Å $\leq$ c $\leq$ 14,21 Å aufweist.

3. Aktives Material für eine positive Elektrode für eine Sekundärbatterie mit wasserfreiem Elektrolyt nach Anspruch 1 oder 2, wobei das Lithium-Übergangsmetalloxid eine Kristallitgröße s im Bereich von 400 Å $\leq$ s $\leq$ 700 Å aufweist, wie aus der Halbwertsbreite eines Beugungspeaks der (104)-Ebene in einem Röntgenbeugungsmuster mit Röntgenbeugung, das gemäß der Beschreibung erhalten wurde, gemäß der Scherrer-Gleichung berechnet.

4. Sekundärbatterie mit wasserfreiem Elektrolyt, umfassend eine positive Elektrode, die das aktive Material der positiven Elektrode für eine Sekundärbatterie mit wasserfreiem Elektrolyt nach einem der Ansprüche 1 bis 3 enthält.

**Revendications**

1. Matériau actif d'électrode positive pour une batterie rechargeable à électrolyte non aqueux, ayant :

un oxyde de lithium et de métal de transition ayant une structure stratifiée et contenant Ni, Nb, un élément métallique tétravalent ou de valence supérieure autre que Nb, qui est Mn, et éventuellement Co ; et des particules additives externes contenant au moins un élément choisi dans le groupe constitué par W, B et Al et adhérant sur des surfaces de particules de l'oxyde de lithium et de métal de transition, dans lequel la proportion de Ni est située dans la plage 90 % en moles $\leq$ Ni < 100 % en moles par rapport à la quantité totale d'éléments métalliques à l'exception du Li dans l'oxyde de lithium et de métal de transition, la proportion de Nb est située dans la plage 0 % en moles $\leq$ Nb $\leq$ 3 % en moles par rapport à la quantité totale d'éléments métalliques à l'exception du Li dans l'oxyde de lithium et de métal de transition, la proportion de Co est située dans la plage Co $\leq$ 2 % en moles par rapport à la quantité totale d'éléments métalliques à l'exception du Li dans l'oxyde de lithium et de métal de transition, la proportion du ou des éléments métalliques autres que Li présents dans une couche de Li de la structure stratifiée est située dans la plage allant de 1 % en moles ou plus à 2,5 % en moles ou moins par rapport à la quantité totale d'éléments métalliques à l'exception du Li dans l'oxyde de lithium et de métal de transition, telles que mesurées conformément au procédé de la description, la demi-largeur n d'un pic de diffraction du plan (208) de l'oxyde de lithium et de métal de transition, dans un motif de diffraction des rayons X avec une diffraction des rayons X acquise conformément à la description, est de 0,30° $\leq$ n $\leq$ 0,50°, et la proportion de W, B et Al dans les particules additives externes est de 0,01 % en moles ou plus et 0,3 % en moles ou moins par rapport à la quantité totale de l'oxyde de lithium et de métal de transition.

2. Matériau actif d'électrode positive pour une batterie rechargeable à électrolyte non aqueux selon la revendication 1, dans lequel la structure cristalline de l'oxyde de lithium et de métal de transition, déterminée à partir du résultat d'analyse d'un motif de diffraction des rayons X avec une diffraction des rayons X acquise conformément à la description, a une constante de réseau a représentant une longueur d'axe a, située dans la plage 2,870 Å $\leq$ a $\leq$ 2,877 Å, et une constante de réseau c représentant une longueur d'axe c, située dans la plage 14,18 Å < c < 14,21 Å.

3. Matériau actif d'électrode positive pour une batterie rechargeable à électrolyte non aqueux selon la revendication 1 ou 2, dans laquelle l'oxyde de lithium et de métal de transition a une taille de cristallite s située dans la plage 400 Å $\leq$ s $\leq$ 700 Å, telle que calculée à partir de la demi-largeur d'un pic de diffraction du plan (104), dans un motif de diffraction des rayons X avec une diffraction des rayons X acquise conformément à la description, et conformément à l'équation de Scherrer.

4. Batterie rechargeable à électrolyte non aqueux comprenant un matériau d'électrode positive contenant le matériau actif d'électrode positive pour une batterie rechargeable à électrolyte non aqueux selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006310181 A
- JP 2009289726 A
- JP 2017084674 A
- CN 103078109
- US 2014205746